# EUROPEAN PATENT SPECIFICATION

(11) **EP 2 401 922 B1**
(45) Date of publication and mention of the grant of the patent: **24.04.2013**
(21) Application number: 10745971.1
(22) Date of filing: 24.02.2010
(51) Int. Cl.: A23C 9/12, A23C 7/04, A23C 9/123

(54) **CULTURED MILK WITH LOW LACTOSE CONTENT AND METHOD FOR MANUFACTURING THE SAME**
KULTIVIERTE MILCH MIT GERINGEM LAKTOSEGEHALT UND VERFAHREN ZU IHRER HERSTELLUNG
LAIT DE CULTURE A FAIBLE TENEUR EN LACTOSE ET SON PROCEDE DE FABRICATION

(30) Priority: 25.02.2009 JP 2009043244
(43) Date of publication of application: 04.01.2012
(73) Proprietor: Meiji Co., Ltd., Tokyo 136-0075 (JP)
(72) Inventor: HORIUCHI, Hiroshi, Odawara-shi Kanagawa 250-0862 (JP)
(74) Representative: Maughan, Sophie Louise
(86) International application number: PCT/JP2010/001235
(87) International publication number: WO 2010/098086

(56) References cited:
- JP-A- 9 084 520
- JP-A- 2005 348 703
- GABRIELA CORTESA ET AL.: 'Production of beta-galactosidase by Kluyveromyces marxianus under oscillating dissolved oxygen tension' PROCESS BIO CHEMISTRY vol. 40, no. 2, 2005, pages 773 - 778

## Description

### Field of Invention

The present invention relates to a method for manufacturing fermented milk that has stable taste and quality regardless of activity of lactobacillus and enzyme by using de-oxygen treated ingredient milk, and the fermented milk manufactured by the method.

### [Background of Art]

Japanese Patent No. 3389377 (Patent Document 1) discloses a method for manufacturing fermented milk using a kind of enzyme, lactase, which has best pH in neutral region and loses its activity in acid region. The method for manufacturing fermented milk disclosed in the Patent Document 1 decompose lactose by means of the lactase while the method makes the lactase lose its activity by fermenting the ingredient milk thereby the acidity of the ingredient milk getting low.
US US 2007 022 43 14 discloses the preparation of fermented milk wherein dissolved oxygen is removed from the starting milk.

### [Prior Art Reference]

### [Patent Document]

[Patent Document 1] Japanese Patent No. 3389377

### [Disclosure of Invention]

### [Problem to be solved by the Invention]

Fermenting speed depends on activity of lactobacillus. Decomposing rate of lactose also depends on activity of enzyme. Thus the method for manufacturing fermented milk disclosed in the Patent Document 1 has drawback that it is difficult to keep taste and quality of fermented milk. That is because if activity of lactobacillus or activity of enzyme changes, the required time duration to ferment the ingredient milk and to decompose lactose also changes. Further, the method for manufacturing fermented milk disclosed in the Patent Document 1 has another drawback that taste and quality of fermented milk differs depend on a lot even though fermented milk is manufactured under the same conditions.

Therefore one object of the present invention is to provide a method for manufacturing fermented milk that can keep good taste and quality regardless of the condition of lactobacillus and enzymes.

### [Means for solving the problem]

The invention basically based on a new insight that when de- oxygen treatment is executed to ingredient milk that comprises enzyme before fermenting the ingredient milk it is possible to keep good taste and quality regardless of the condition of lactobacillus and enzymes.

Namely, the first aspect of the invention is directed to a method for manufacturing fermented milk that comprises a step of fermenting the ingredient milk that comprises enzyme and a step of executing de- oxygen treatment before the fermenting step. The enzyme has best pH of activation in neutral region and loses its activity in acid region and can decompose lactose which is included in the ingredient milk when the enzyme is in an active state. As shown by the working Examples herein, it is possible to keep good taste and quality regardless of the condition of lactobacillus and enzymes by executing de-oxygen treatment to the ingredient milk before fermentation step. A preferred embodiment of the present invention uses lactase the origin of which derives from *Kluyveromyces lactis* as the enzyme. The fermentation step of the preferred embodiment of the invention dissolves lactose comprised in the ingredient milk whereby the enzyme loses it activity. Further the preferred aspect of the present invention makes decomposing rate of lactose of the ingredient milk be 75 wt% to 90 wt%.

The second aspect of the present invention is fermented milk which is manufactured by the method explained the above.

### [Technical Effect]

The present invention can provide fermented milk that has good taste and quality regardless of the condition of lactobacillus and enzymes by executing de-oxygen treatment to the ingredient milk before fermentation step.

### [Brief Explanation of Drawings]

[Fig. 1] Fig. 1 is a graph that shows the time depended change of the decomposing rate of fermented milk and the time dependent change of acidity of fermented milk when GODO-YNL10000 (lactase), which is heated for one hour, is added together with starter.
[Fig. 2] Fig. 2 is a graph that shows the time depended change of the decomposing rate of fermented milk and the time dependent change of pH of fermented milk when GODO-YNL10000 (lactase), which is heated for one hour, is added together with starter.
[Fig. 3] Fig. 3 is a graph that shows the measured data of decomposing rate of manufactured fermented milk.

### [Best Mode for Carrying out the Invention]

The method for manufacturing fermented milk which relate to the first aspect of the invention has a de- oxygen treatment step for executing de- oxygen treatment to the ingredient milk and a fermenting step for fermenting the de- oxygen treated ingredient milk. In the fermenting step, enzyme decomposes lactose. Thus the ingredient milk in the fermenting step has enzyme. The enzyme may be added to the ingredient milk either before the de-oxygen treatment step or after the de-oxygen treatment step.

Raw materials, apparatuses, manufacturing conditions for manufacturing fermented milk are disclosed, for example, in JP2004-180526A, JP2005-176603A, JP2006-288309A, USP6025008, USP5482723, USP5096731, USP4938973, and the disclosure therein can be used (these references are incorporated herein by reference).

In this Description, "fermented milk" can be yoghurt or any one of "fermented milk", "dairy lactic acid drink" or "lactic acid drink" defined in the Ministerial Ordinance concerning the Ingredient Standards for Milk and Dairy Products. The examples of "fermented milk" of the present invention are set-type yoghurt (hard-type yoghurt, solid-type fermented milk), soft-type yoghurt (paste-type fermented milk), and drink-type yoghurt (liquid-type fermented milk). The preferred fermented milk of the present invention is set-type yogurt such as plain type yogurt. Generally, plain-type yoghurt is manufactured by placing raw materials mixture in a container and subsequently fermenting it (post-fermentation). On the other hand, soft-type yoghurt and drink-type yoghurt are manufactured by mixing ingredients such as sugar syrup and sarcocarp with fermented milk and the placing their mixture in a container after atomizing and homogenizing the fermented milk (pre-fermentation). The manufacturing method of this pattern can be applied to any patterns for the manufacturing processes described above, but preferably to the manufacture by post-fermentation.

### De-Oxygen Step

A de-oxygen step is a step or process for removing oxygen that is dissolved in ingredient milk by adding inert gas into the ingredient milk or removing gas at low pressure or at vacuum. The step is thought to bring benefit to protect proteins as well as removing oxygen.

"Ingredient milk" is ingredient of fermented milk such as yogurt, and that is also called as yogurt mix and fermented milk mix. It is possible to use any type of known ingredient milk. Ingredient milk includes without sterilization and with sterilization. Ingredients or raw materials for the ingredient milk are for example water, raw milk, sterilized milk, non-fat milk, full-fat powdered milk, skimmed milk, butter milk, butter, cream, whey protein concentrate (WPC), whey protein isolate (WPI), Alpha lactalbumin, and Beta lactoglobulin. It is possible to add heated gelatin to the ingredient milk. It is possible to add enzyme to the ingredient milk such that lactose is decomposed. Ingredient milk is already known and thus it is possible to adjust based on know method.

In the de-oxygen step, it is possible to use known apparatuses to exchange the dissolved oxygen with inactive gas. Concretely speaking, it is possible to exchange oxygen gas that is dissolved in ingredient milk with inert gas by means of apparatuses disclosed in JP2001-78665A, JP2001-9206A, or JP2005-110527A (whole of these references are incorporated herein by reference) The examples of "Inert gas" rare gas such as helium, neon, argon, and xenon and nitrogen gas.

It is possible to remove oxygen dissolved in the ingredient milk by means of degas treatment in place of replacement of inert gas. The examples of apparatus of degas treatment are apparatus that are disclosed in JP 2002-370006A and JP2005-304390A (the whole contents thereof are incorporated herein by reference).

In the de-oxygen step, a de-oxygen treatment may be executed to the extent that the amount of oxygen dissolved in the ingredient milk (Dissolved oxygen level, DO) becomes less than 5 ppm, preferably less than 3 ppm and more preferably less than 2 ppm.

### Fermentation Step

A fermentation step is a step for fermenting the ingredient milk. The fermentation step may comprise two steps of fermentation. Through the fermentation step, it is possible to obtain commercially acceptable fermentation milk. It is preferred for the present invention to mix starter with the ingredient milk and then execute a fermentation step. The ingredient milk at the fermentation step may comprise enzyme.

It is possible to use known starters as "starter" of the present invention. A preferred starter is lactobacillus starter. It is possible to use one or more than 2 kinds of lactobacillus starters selected from the group of "*L. bulgaricus, S. thermophilus, L. lactis, L. gasseri,* strains in the genus *Bifidobacterium,* and lactic acid bacteria and yeasts generally used for manufacturing fermented milk". Among these, starter that comprises *L. bulgaricus* and *S*. *thermophilus,* both of which are the standards of the Codex Standard, is preferable one. It is possible to add other lactic acid bacteria, such as *L. gasseri* and *Bifidobacterium,* depends on the characteristics of the desired fermented milk. The amount of starter may be adjusted based on, for example, the conventional amount that is used in usual method for manufacturing fermented milk. Inoculation of starter can be conducted according to known methods used in manufacture of fermented milk.

The enzyme of the present invention has best pH of activation in neutral region and loses its activity in acid region. The enzyme can decompose lactose which is included in the ingredient milk when the enzyme is in an active state. The example of the enzyme is the lactase that is disclosed in patent document 1. The examples of lactase are those derived from bacteria or yeast. The best pH for their activity is 6.3 to 7.5 and the pH at which they lose their activity is 6.0 to 4.0. Preferred examples of lactase are that derived from *Kluyveromyces Lactis* and that derived from *Kluyveromyces Fragilis.* The lactase derived from *Kluyveromyces Lactis* comprises *Kluyveromyces Lactis* itself and lactase that is deviated from *Kluyveromyces Lactis.*

The fermentation conditions such as fermentation temperature may be adjusted with considering kinds of lactobacillus added to the ingredient milk and desired taste of fermented milk. The example of the condition is to keep the temperature of a fermentation room (fermentation temperature) to be from 30 degrees C to 50 degrees C. Under such a temperature, generally lactobacillus has high activity and thus it is possible to promote fermentation effectively. The more preferred fermentation temperature is from 40 to 45 degrees C and still more preferred fermentation temperature is from 41 to 44 degrees C.

The fermentation duration may adjust based on starter and fermentation temperature. Example of the fermentation duration is from 1 hour to 5 hours and it may be from 2 hours to 4 hours.

Usually to manufacture fermentation milk enzyme is sterilized by heat sterilization after lactose is decomposition at low temperature with a viewpoint of decreasing a risk of contamination of bacteria and then fermentation is executed. On the contrary, at the fermentation step of the present invention may execute fermentation to a mixture of yogurt mix (ingredient milk), starter and enzyme, in which the enzyme is in an active state. The fermentation step of the preferred embodiment of the invention dissolves lactose comprised in the ingredient milk whereby the enzyme loses it activity. Such a treatment can improve decomposition rate of lactose as shown by the following working examples. Further such a method does not require an enzyme treatment by adding enzyme before high temperature sterilize step and thus it becomes possible to simplify the steps of manufacturing the fermented milk and it can utilize the taste that fermentation milk originally has. Furthermore, such a treatment can effectively improve decomposition rate of lactose and thus it save keep investigating change of decomposition rate of lactose and progress of fermentation (acidity of fermented milk) and it makes controlling products so easily.

When the decomposing rate of lactose is more than 65 wt%, it is possible to obtain fermentation milk with favorable taste. Preferred decomposing rate of lactose is more than 75 wt% and it may be 75 wt% to 90 wt% and it may be 80 wt% to 90 wt%.

### [Examples]

Examples of the invention are explained by the following working examples. The present invention is not limited to the following examples.
The ingredient milk was prepared by dissolving non-fat powdered milk (2 wt %) into milk (87 wt %) and tap water (13 wt %). The ingredient milk was distilled at 95 degrees C for 2 minutes. Then the ingredient milk was cooled to 40 degrees C. After that a de-oxygen treatment was executed to the ingredient milk. 0.02 wt % of Lactase as enzyme and 2 wt % of starter, lactobacillus, that is used for Meiji's Bulgaria Yogurt (a registered trademark) were added to de-oxygen treated ingredient milk. Finally the ingredient milk was fermented till its pH became about 4.7 at 40 degrees C. Fermented milk (Working Examples 1 to 4) was obtained.

As control, fermented milk was obtained based on the same conditions of the above working examples except for lacking of de-oxygen treatment (Comparison Examples 1 and 2). Further fermented milk was obtained based on the same conditions of the above working examples except for lacking of de-oxygen treatment and without adding any enzyme (Comparison Example 3).

To investigate the taste and quality of fermented milk, taste of fermented milk, decomposition rate, required time for fermentation (required time to acidity of fermented milk become 0.7 % at fermented temperature of 40 degrees C) of Fermented milk of working examples 1 to 4 (fermented milk of the present invention) and fermented milk of Comparison Examples 1 and 2. Table 1 shows the taste of the fermented milk, the decomposition rate of lactose, and required time for fermentation of fermented milk of the present invention and that of Comparison example.

[Table 1]

**Table 1 Taste and decomposition rate of lactose of fermentaion milk of the invention and Comparison Example**

| Sample | Taste | Decomposition Rate [%] | Fermentation Time*1 |
|---|---|---|---|
| Example 1 | moderate sourness and sweetness | 79.3 | 3 h 0 min |
| Example 2 | moderate sourness and sweetness | 81.5 | 3 h 0 min |
| Example 3 | moderate sourness and sweetness | 86.8 | 3 h 5 min |
| Example 5 | moderate sourness and sweetness | 79.7 | 2 h 55 min |
| | Average value ± standard derivation: | 81.8 ± 3.4 | 3h 0min ± 5 min |
| Comp Exam 1 | moderate sourness and sweetness | 82.4 | 3 h 15 min |
| Comp Exam 2. | moderate sweetness | 94.1 | 3 h 45 min |
| | Average value ± standard derivation: | 88.3 ± 8.3 | 3h 30 min± 15 min |

| | | | |
|---|---|---|---|
| *1 Requred time to reach 0.7 % of acidity at 40 degrees C | | | |

Normal phase column Asahipak NH2P-50, 4.6x250 mm (Made by Shodex) and Guide Column Asahipak NH2P-50G 4A, 4.6x10mm (Made by Shodex) as HPLC were used when the concentrate of lactose was measured.

As shown in the table 1, the average decomposition rate of lactose of working examples 1 to 4 was 81.8 % with standard deviation of 3.4 %, and average required time for fermentation was 3 hours with standard derivation of 8.3%. The average decomposition rate of lactose of Comparison examples 1 and 2 was 88.3 % with standard deviation of 8.3 %, and average required time for fermentation was 3 hours and 15 minutes with standard derivation of 15 minutes. Table 1 shows that each of fermented milk of the present invention has stable and good taste (valance of sour taste and sweet taste) while the fermented milk of comparison examples had different taste even though they were manufactured in the same conditions. Table 1 further shows that the quality (decomposition rate of lactose) and required time for fermentation of the fermented milk were almost the same while quality and required time for fermentation had derivations. Namely, it shows that the methods of Comparison Examples 1 and 2 cannot provide fermented milk with stable taste and quality. Please note that the method of Comparison Example 3 is generally used when usual fermented milk is manufactured. Because lactase was not added to the ingredient milk, the fermented milk of Comparison Example 3 is thought to have more lactose than that of Working Examples 1 to 4.

Next, hardness (Curd tension) was measured. Curd tension was evaluated by means of Neo Curd meter M302 (manufactured by I techno engineering Co. previously named Iio Electronic Co.). The Curd meter measures insert angle to fermented milk by using a yogurt knife with 100 g weight and show the measured value by means of curvature. The vertical axis of the graph is height of the knife and the horizontal axis is weight that is added further to the 100 g weight. The graph makes the length of 10 mm at the vertical axis and the length of 10 g at the horizontal axis become same. The length of the insert angle curvature till fracture is an index of hardness value (hardness and elasticity) [g].

Table 2 shows the hardness of fermented milk obtained in each condition.

[Table 2]

**Table 2 Fermentation Duration and Hardness of Obtained Fermented Milk**

| Sample | Hardness (Curd Tension) |
|---|---|
| Examples 1 to 4 | 45 g |
| Comparison Examples 1 and 2 | 35 g |
| Comparison Example 3 | 45 g |

The fermented milk of the present invention has higher hardness and has almost the same hardness as the fermented milk of Comparison Example 3, which is manufactured by conventional method. On the contrary, the hardness of the fermented milk of Comparison Examples 1 and 2 was 20% lower than that of the fermented milk of the present invention or Comparison Example 3.

### [Working Example 5] Evaluation of the method to add enzyme and starter simultaneously (best temperature)

GODO-YNL10000 was used as enzyme. GODO-YNL10000 (10000 U/g), which is diluted with glycerin to 5 times, comprises lactase that is derived from *Kluyveromyces lactis.* Thus the best reaction temperate, pH and condition of losing activity of GODO-YNL10000 is the same as those of GODO-YNL. Namely, the best condition of dissolving reaction caused by GODO-YNL10000 is 35 to 45 degrees C and neutral region. GODO-YNL10000 gradually loses its activity under the condition of more than 50 degrees C. GODO-YNL10000 gradually loses its activity when it is put under acid conditions such as lower than pH 5. GODO-YNL10000 protects enzyme with glycerin. Thus GODO-YNL10000 has improved heat resistance by comprising glycerin. To evaluate the heat resistance of original liquid of GODO-YNL10000, GODO-YNL10000 was heated at the temperatures shown in table 3 for 1 hour and fermented milk was manufactured on the same condition as the working example 1.

[Table 3]

**Table 3 Evaluation of Heat resistance of GODO-YNL10000**

| Heat Temperature (C) | Decomposition Rate (%) | State of Enzyme |
|---|---|---|
| Room Temperature(25 C) | 78.8 | Normal State |
| 40 | 80.1 | Normal State |
| 45 | 81.9 | Normal State |
| 50 | 77.1 | Normal State |
| 55 | 76.9 | Normal State |
| 60 | 54.1 | Low Activity |
| 65 | 23.8 | Lost Activity |
| No enzyme was added | 23.5 | - |

Table 3 shows that the best reaction temperature of GODO-YNL10000 is around 45 degrees C. When the decomposition rate of lactose is more than 65 %, it is possible to obtain fermented milk with favorable taste. Thus table 3 shows that, temperature of from ordinal temperature to 55 degrees C brings favorable fermented milk when GODO-YNL10000 is used to manufacture fermented milk. Usually in manufacturing fermented milk, after heat sterilization of yogurt mix which was executed decomposition of lactose at low temperature, the fermented milk is arranged to the best temperature of fermentation. In that case, the enzyme loses its activity by the heat sterilization. The decomposition rate of lactose for the fermented milk manufactured by means of conventional methods is about 70 % even for the best case. On the contrary when GODO-YNL10000 and starter was added simultaneously it was possible to obtain decomposition rate of more than 80 %. It is thought that when GODO-YNL10000 and starter was added simultaneously enzyme finally loses its activity by acid generated through the decomposition of lactose in the fermentation step.

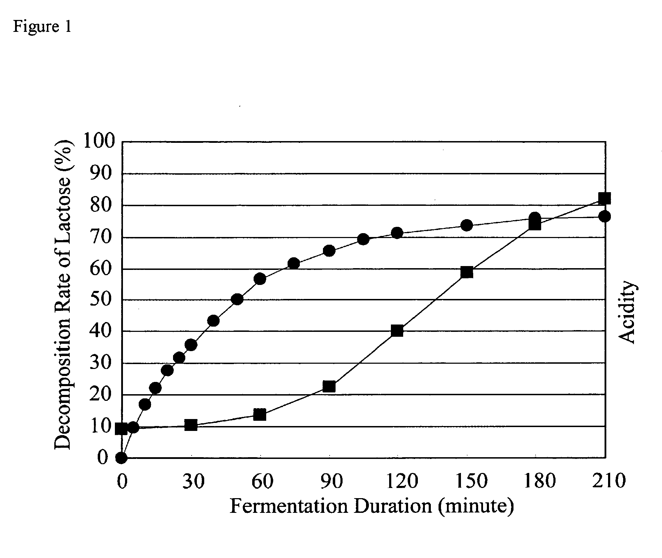

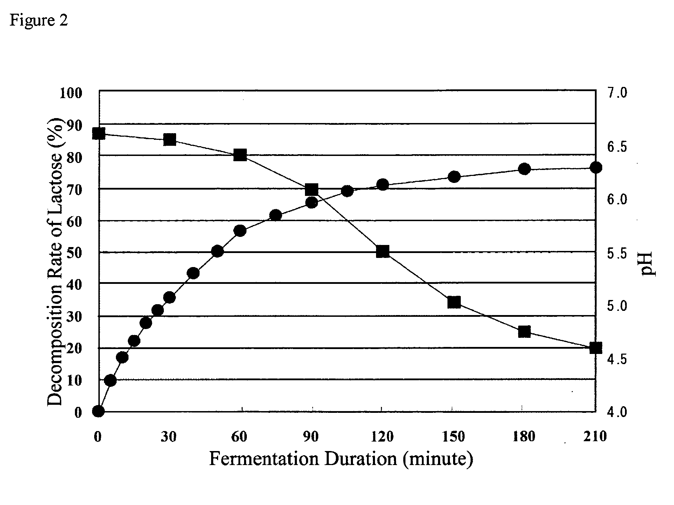

Fig. 1 is a graph that shows the time depended change of the decomposing rate of fermented milk and the time dependent change of acidity of fermented milk when GODO-YNL10000 (lactase), which is heated for one hour, is added together with starter.
The circles in the figure show the decomposition rate of lactose and the rectangles in the figure indicate the acidity. Fig. 2 is a graph that shows the time depended change of the decomposing rate of fermented milk and the time dependent change of pH of fermented milk when GODO-YNL10000 (lactase), which is heated for one hour, is added together with starter. The circles in the figure show the decomposition rate of lactose and the rectangles in the figure indicate the ph values. Figure 1 shows that the acidity of fermented milk improves when lactose is decomposed along with fermentation progresses. Figure 2 shows that pH value of the fermented milk decreases when lactose is decomposed along with fermentation progresses.

### [Working Example 6] Evaluation of the method to add enzyme and starter simultaneously (Amount)

Next the amount of added enzyme was evaluated. Fermented milk was manufactured on the same conditions as those of the working example 4 except for adding GODO-YNL10000 at the amount (wt%) shown in table 4 together with starter after keeping GODO-YNL10000 (lactase) for 1 hour at 38 degrees C. The result was shown in table 4. In the table F-kit indicates the result of measurement by F-Kit and HPLC indicates that the result of measurement by High Performance Liquid Chromatography.

[Table 4]

**Table 4 Evaluation of heat resistance of GODO-YN L 10000**

| Adding Rate of Lactase (%) | Decomposition Rate of Lactose (%) | |
|---|---|---|
| | F-kit | HPLC |
| 0.05 | 71.3 | 72.9 |
| 0.06 | 71.2 | 74.2 |
| 0.07 | 76.9 | 78.2 |
| 0.08 | 78.6 | 81.7 |
| 0.10 | 81.4 | 85.4 |
| 0.12 | 84.8 | 84.7 |

Table 4 shows that even though about 0.05 wt % of lactase is sufficient to obtain favorable decomposition rate of lactose. Further it shows that it is possible to obtain high decomposition rate of lactose when 0.1 wt % of lactase was added. Previously, the conventional method for manufacturing fermented milk control the quality of fermented milk by frequent measuring of decomposition rate of lactose by using, for example, Medi-Safe (Trademark). On the contrary, adding enzyme (lactase) and lactobacillus (starter) simultaneously brings very high decomposition rate of lactose as shown in table 4. Thus it is possible to obtain favorable fermented milk if amount of lactose that is added is controlled when enzyme and lactobacillus are added simultaneously. Thus adding enzyme and lactobacillus simultaneously makes controlling of product easy and brings improvement of productivity.

### [Working Example 7] Evaluation of the method to add enzyme and starter simultaneously (Evaluation of Derivation)

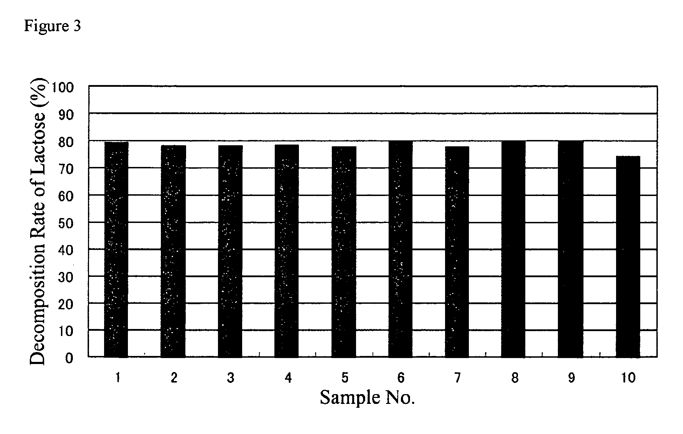

10 rots of fermented milk, which decomposition of lactose was executed at room temperature, were prepared and decomposition rate of obtained fermented milk was measured by means of F-Kit. The result is shown at figure 3. Fig. 3 is a graph that shows the measured data of decomposing rate of manufactured fermented milk.
Figure 3 shows that the decomposing rate of manufactured fermented milk is stable at high value.

### [Industrial Applicability]

The present invention can be used in food industry.

## Claims

1. A method for manufacturing fermented milk which comprises a fermentation step for fermenting ingredient milk that comprises starter and enzyme,
wherein enzyme has best pH of activation in neutral region and loses its activity in acid region and can decompose lactose which is included in the ingredient milk when the enzyme is in an active state, and
wherein the method further comprises a de-oxygen step for executing de-oxygen treatment to the ingredient milk before the fermenting step.

2. A method for manufacturing fermented milk in accordance with claim 1,
wherein the enzyme is lactase the origin of which derives from *Kluyveromyces lactis.*

3. A method for manufacturing fermented milk in accordance with claim 1,
wherein at the fermentation step the enzyme loses its activity because of decomposition of lactose that is included in the ingredient milk.

4. A method for manufacturing fermented milk in accordance with claim 1,
wherein the fermentation step is a step for making decomposition rate of lactose of the ingredient milk be 75 wt% to 90 wt%.

5. Fermented milk manufactured in accordance with any one of claims 1 to 4.

## Patentansprüche

1. Verfahren zur Herstellung fermentierter Milch, das einen Fermentierungsschritt zur Fermentierung des Milchbestandteils umfasst, der einen Starter und Enzyme umfasst,
wobei das Enzym den besten pH-Wert zur Aktivierung im neutralen Bereich aufweist und seine Aktivität im sauren Bereich verliert und Laktose zerlegen kann, das in dem Milchbestandteil enthalten ist, wenn sich das Enzym in einem aktiven Zustand befindet, und
wobei das Verfahren weiterhin einen Desoxydierungsschritt zur Ausführung einer Desoxydierungs-Behandlung des Milchbestandteils vor dem Fermentierungsschritt umfasst.

2. Verfahren zur Herstellung fermentierter Milch gemäß Anspruch 1, bei der das Enzym Laktase ist, dessen Ursprung von Kluyveromyces lactis abgeleitet ist.

3. Verfahren zur Herstellung fermentierter Milch gemäß Anspruch 1, bei der an dem Fermentierungsschritt das Enzym seine Aktivität aufgrund der Zerlegung von Laktose verliert, die in dem Milchbestandteil enthalten ist.

4. Verfahren zur Herstellung fermentierter Milch gemäß Anspruch 1, bei dem der Fermentierungsschritt ein Schritt zur Ausbildung der Zerlegungs-Rate von Laktose des Milchbestandteils auf 75 Gew.-% bis 90 Gew.-% ist.

5. Fermentierte Milch, die gemäß einem der Ansprüche 1 bis 4 hergestellt ist.

## Revendications

1. Méthode pour la fabrication, de lait fermenté qui comprend une étape de fermentation pour la fermentation du lait ingrédient qui comprend une culture d'amorçage (« starter ») et une enzyme,
dans laquelle l'enzyme a le meilleur pH d'activation dans la région neutre et perd son activité dans la région acide et peut décomposer le lactose qui est inclus dans le lait ingrédient lorsque l'enzyme est dans un état actif, et
la Méthode comprenant en outre une étape de désoxygénation pour exécuter un traitement de désoxygénation du lait ingrédient avant l'étape de fermentation.

2. Méthode pour la fabrication de lait fermenté selon la revendication 1,
dans laquelle l'enzyme est la lactase dont l'origine provient de *Kluyveromyces lactis.*

3. Méthode pour la fabrication de lait fermenté selon la revendication 1,
dans laquelle à l'étape de fermentation l'enzyme perd son activité à cause de la décomposition de lactose qui est inclus dans le lait ingrédient.

4. Méthode pour la fabrication de lait fermenté selon la revendication 1,
dans laquelle l'étape de fermentation est une étape faisant que le taux de décomposition du lactose du lait ingrédient soit 75% en poids à 90% en poids.

5. Lait fermenté fabriqué selon l'une quelconque des revendications 1 à 4.
